# EUROPÄISCHE PATENTANMELDUNG

(11) **EP 2 944 539 A2**
(43) Veröffentlichungstag der Anmeldung: **18.11.2015**
(21) Anmeldenummer: 15001471.0
(22) Anmeldetag: 15.05.2015
(51) Int. Cl.: B62D 1/04, B60K 28/06, G01L 5/22, G01L 1/14, G01L 1/16

(54) **ÜBERWACHUNGSSYSTEM FÜR KRAFTFAHRZEUGE**

(30) Priorität: 15.05.2014 DE 102014007163
(71) Anmelder: Güzelocak, Denis, 81243 München (DE); Gerber, Michael, 85716 Unterschleißheim (DE); Gerber, Florian, 85386 Eching (DE)
(72) Erfinder: Güzelocak, Denis, D-81243 München (DE)
(74) Vertreter: Feldkamp, Rainer

(57) **Zusammenfassung**

Ein Überwachungssystem für Kraftfahrzeuge weist eine Anzahl von Sensoren auf, die auf Steuerungs- und/oder Betätigungseinrichtungen des Kraftfahrzeuges angeordnet sind, die einen Kern (102, 103, 104) und eine diesen teilweise abdeckende Außenhülle (7) aufweisen. Die Sensoren sind zwischen dem Kern und dessen Außenhülle eingebettet und liefern bei einer Kraftausübung auf die Außenhülle (7) ein Ausgangssignal. Die Sensoren sind durch eine auf den Kern aufspannbare Sensoreinheit (6) mit einer ersten Folie (31) mit einem ersten Leiterbahnmuster (33) und mit einer darüber angeordneten zweiten Folie (32) mit einem zweiten Leiterbahnmuster (34) gebildet. Die Leiterbahnmuster (33, 34) sind auf einander zugewandten Flächen der beiden Folien (31, 32) angeordnet und die einander zugewandten Flächen der Folie (31, 32) sind über Abstandselemente (37) miteinander derart verbunden, dass die Folien elastisch voneinander fort vorgespannt sind und durch Ausübung einer Kraft auf zumindest eine der Folien ein Kontakt zwischen dem ersten und zweiten Leiterbahnmuster (33, 34) herstellbar ist.

## Beschreibung

Die Erfindung bezieht sich auf ein Überwachungssystem für Kraftfahrzeuge der im Oberbegriff des Anspruchs 1 genannten Art.

Aus der DE 10 2010 035 940 B4 ist ein Überwachungs- und Notfallsystem dieser Art bekannt, bei dem auf den Steuerungs- und/oder Betätigungseinrichtungen flächige Leiterelemente mit Kontaktvorsprüngen vorgesehen sind, die in Öffnungen einer zwischen den Leiterelementen liegenden elastischen Schicht eingreifen und bei Druckausübung in Kontakt miteinander gelangen, um ein Ausgangssignal zu erzeugen, das den Kontakt mindestens einiger der Kontaktvorsprünge miteinander anzeigt, wenn auf die Steuerungs- und/oder Betätigungseinrichtungen des Kraftfahrzeuges eine Kraft, beispielsweise bei dem Halten und Bewegen eines Lenkrades und/oder eines Gangschalthebels oder dergleichen ausgeübt wird.

Der Erfindung liegt die Aufgabe zugrunde, ein Überwachungssystem der eingangs genannten Art zu schaffen, das bei einfacherem Aufbau und einfacherer Montage an der jeweiligen Steuerungs- und/oder Betätigungseinrichtung erweiterte Auswertemöglichkeiten ergibt.

Diese Aufgabe wird durch die Merkmale des Anspruchs 1 gelöst.

Vorteilhafte Ausgestaltungen und Weiterbildungen der Erfindung ergeben sich aus den Unteransprüchen.

Durch die erfindungsgemäße Ausgestaltung des Überwachungssystems ist es möglich, die einzelnen Sensorelemente in Form einer einstückigen Sensoreinheit auszubilden, die auf den Kern der Steuerungs- und/oder Betätigungseinrichtung aufspannbar ist und durch eine Außenhülle abgedeckt werden kann.

Die einzelnen Leiterbahnmuster auf den Folien können in Gruppen unterteilt werden, wobei vorzugsweise die Leiterbahnen und/oder Sammelleitungen in Gruppen angeordnet sind, die getrennte Gruppen bilden, die getrennt von den Auswerteeinrichtungen auswertbar sind.

Gemäß einer bevorzugten Ausgestaltung der Erfindung sind die Verbindungs-Leiterbahnen und/oder Sammelleitungen aus einem Material hergestellt, das über die Länge der Leitungen einen messbaren Widerstand ergibt, so dass in Abhängigkeit von der Position und Betätigung einzelner Sensoren der Sensoreinheit eine Ermittlung der Position einer Betätigung bzw. Kraftausübung und/oder eine Änderung dieser Betätigung sehr leicht durch einen Mikroprozessor auszuwerten ist.

Die Erfindung wird im Folgenden anhand von in der Zeichnung dargestellten Ausführungsbeispielen noch näher erläutert.

In der Zeichnung zeigen:
- Figur 1: eine schematische Darstellung eines Lenkrades, das ein Beispiel für eine Betätigungseinrichtung zeigt;
- Figur 1A: eine stark vergrößerte Querschnittsansicht entlang der Linie I-I nach Figur 1;
- Figur 2: eine Abwicklung eines Teils einer Ausführungsform der Sensoreinheit;
- Figur 3: eine vergrößerte Teilansicht einer der Laschen 11, 13 der Sensoreinheit nach Figur 2;
- Figur 4: eine Schnittansicht entlang der Linie IV-IV nach Figur 3, die in stark vergrößerter Darstellung und lediglich schematisch die Anordnung der Leiterbahnen und Abstandselemente auf den Folien zeigt;
- Figur 5: eine im Wesentlichen der Figur 4 entsprechende Querschnittsansicht, jedoch entlang der Linie V-V nach Figur 3;
- Figur 6: eine Ausführungsform einer Auswerteschaltung für die Überwachungseinheit.

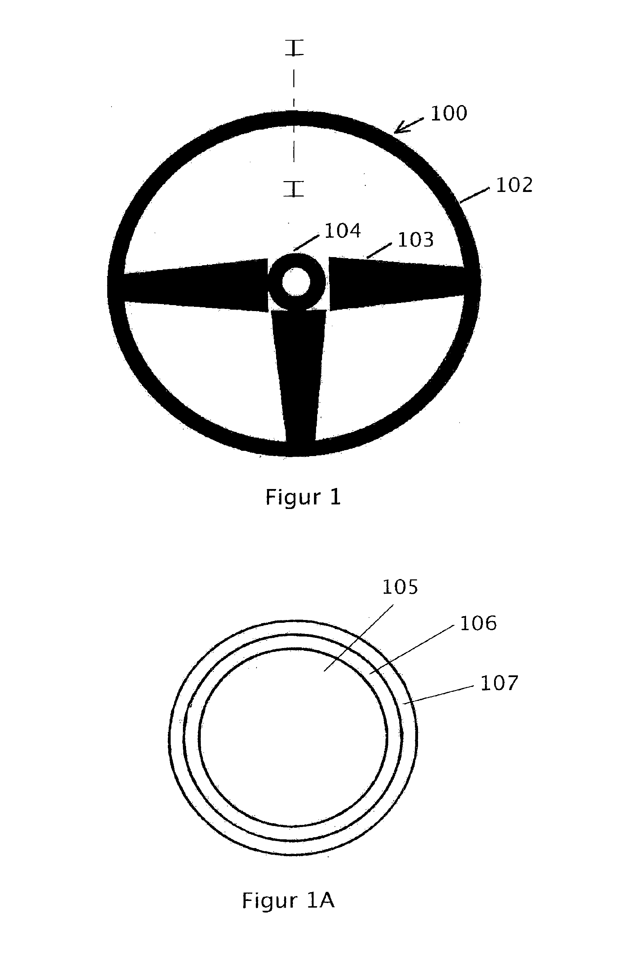

In Figur 1 ist als Beispiel für eine Betätigungseinrichtung eines Kraftfahrzeuges ein Lenkrad 1 dargestellt, das einen Lenkradkranz 102, Speichen 103 sowie eine Nabe 104 aufweist. Die vorliegende Anmeldung ist jedoch in keiner Weise auf Lenkräder beschränkt, sondern die nachfolgend beschriebene Sensoreinheit lässt sich auch auf andere Betätigungseinrichtungen, wie Schalthebel und dergleichen anwenden.

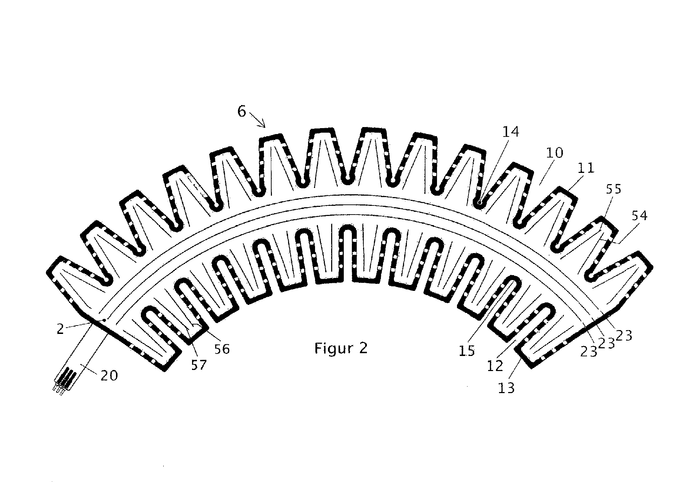

In Figur 2 ist eine Abwicklung einer Ausführungsform einer flächigen Sensoreinheit 6 gezeigt, die einen Mittelsteg 2 aufweist, von dem auf beiden Seitenkanten Laschen 11, 13 ausgehen, die mit jeweiligen Abständen voneinander angeordnet sind. Die Laschen 11, 13 können in der in Figur 2 gezeigten Weise entlang der Längsrichtung des Mittelsteges 2 versetzt zueinander und/oder miteinander ausgerichtet angeordnet sein, um ein möglichst stauchungsfreies Anlegen der Sensoreinheit 6 an den Kern der Betätigungseinrichtung zu ermöglichen.

Um das das stauchungsfreie Anlegen der Sensoreinheit an einen Kern zu unterstützen, der einen beispielsweise kreisrunden, ovalen oder ähnlichen Querschnitt aufweist, nähern sich die Seitenkanten der Laschen 11, 13 in einer Richtung von dem Mittelsteg 2 fort einander an, so dass zwischen den Laschen in ihrer Breite zunehmende Lücken 10, 12 gebildet werden, die ein überlappungsfreies Anlegen der Laschen 11, 13 an den Kern erleichtern. Zusätzlich können die Verbindungsbereiche der Seitenkanten einander benachbarter Laschen in der in Figur 2 gezeigten Weise durch Abrundungen 14, 15 gebildet sein, um Stauchungen der Sensoreinheit 6 in diesem Bereich zu vermeiden.

Als zusätzliche Maßnahme ist es möglich, die Oberfläche des Kerns 102 mit Vertiefungen zu versehen, die einen Teil der Sensoreinheit 6 aufnehmen, der beim Anlegen der Sensoreinheit an den Kern gestaucht werden könnte.

Die in Figur 2 gezeigte Ausführungsform ist beispielsweise für das schematisch in Figur 1 dargestellte Lenkrad geeignet, wobei der Mittelsteg 2 auf eine Vorderfläche des den Kern der Betätigungseinrichtung bildenden Lenkradkranzes 102 eines Lenkrades aufgelegt wird und die Laschen um den Lenkradkranz 102 herum gelegt werden, so dass eine weitgehend vollflächige Abdeckung des Lenkradkranzes 102 durch die Sensoreinheit 6 gegeben ist.

Obwohl in Figur 2 eine Ausführungsform der Sensoreinheit gezeigt ist, bei der der Mittelsteg 2 eine Form aufweist, die entsprechend der gekrümmten Vorderfläche eines den Kern der Betätigungseinrichtung bildenden Lenkradkranzes gekrümmt ist, ist in einer In gleicher Weise eine nicht dargestellte Ausführungsform denkbar, bei der der Mittelsteg 2 geradlinig ist und auf den Außenumfang eines Lenkradkranzes aufgelegt ist, während die Laschen auf die Vorder- und Hinterkanten und den Innenumfang des Lenkradkranzes aufgelegt sind, um eine weitgehend vollflächige Abdeckung des Kerns zu erreichen.

Entsprechendes gilt auch für andere Kerne, die eine zwei- oder dreidimensional gekrümmte Oberfächenform aufweisen.

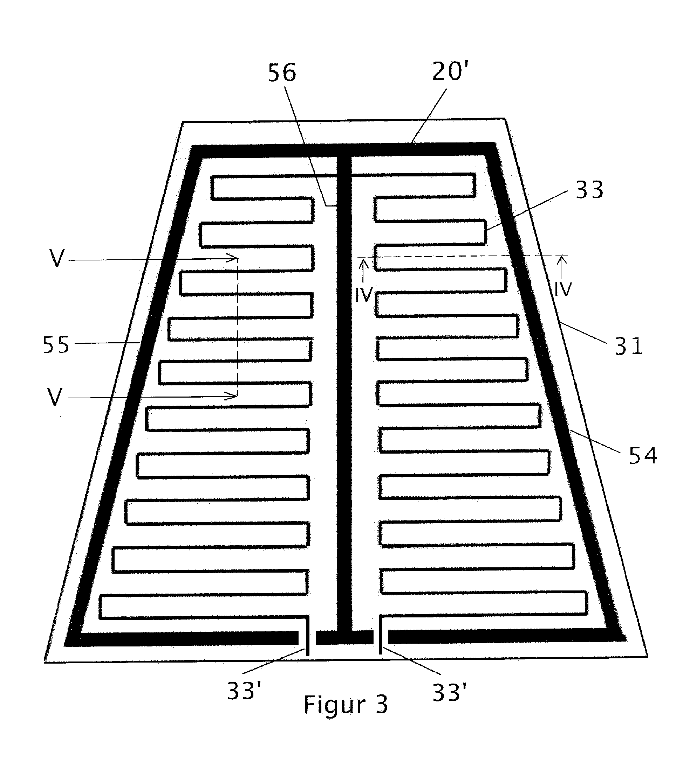

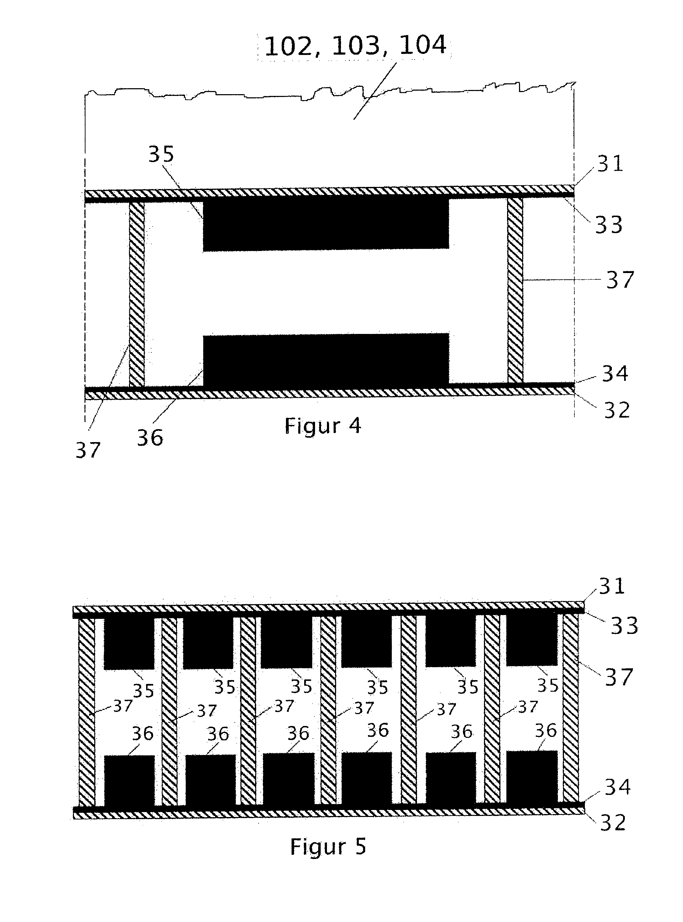

In Figur 2 ist weiterhin ein Ausführungsbeispiel der Anordnung der weiter unten anhand der Figur 3 näher erläuterten Leiterbahnen gezeigt. Aus Figur 2 ist bereits zu erkennen, dass entlang des Mittelsteges 2 Sammelleitungs-Leiterbahnen 23 verlaufen, die über eine flexible Anschlussleitung 20 in Form einer Leiterfolienbahn mit einer Steckverbindung verbunden werden können. Diese einzelnen Sammelleitungs-Leiterbahnen 23 sind mit den in Figur 3 schematisch gezeigten Verbindungs-Leiterbahnen mit einzelnen Kontaktbereichen der Leiterbahnmuster auf zumindest einer der Folien 31, 32 gemäß den Figuren 4 und 5 verbunden, so dass durch eine entsprechende Gruppierung der Verbindungen zwischen den Leiterbahnen in den einzelnen Laschen und den Sammelleitungs-Leiterbahnen 23 auf dem Mittelsteg eine Feststellung der Position einer Kraftausübung auf eine oder beide der Folien ermittelt werden kann, die zur Kontaktgabe zwischen den in den Figuren 4 und 5 gezeigten Kontaktflächen 35, 36 der Leiterbahnmuster 33, 34 sowohl in den Laschen 11, 13 als auch im Bereich des Mittelsteges führt.

Die Figuren 4 und 5 zeigen eine vergrößerte Teil-Querschnittsansicht der der Sensoreinheit 6, die eine dem jeweiligen Kern 102, 103, 104 einer Betätigungseinrichtung benachbarte erste Folie 31 und eine außen liegende zweite Folie 32 umfasst, wobei Leiterbahnmuster 33, 34, 35, 36 auf den einander zugewandten Oberflächen der beiden Folien 31, 32 angeordnet sind.

Zwischen den beiden Folien 31, 32 sind Abstandselemente 37 angeordnet, die die zwischen den Abstandselementen liegenden Bereiche der Leiterbahnmuster 33, 34, 35, 36 im unbetätigten Zustand auf Abstand voneinander halten. Bei Kraft- oder Druckausübung auf die außen liegende Folie 32 werden die zwischen den Abstandselementen liegenden Bereiche der Folie 32 und/oder die benachbarten Abstandselemente selbst verformt, so dass sich ein Kontakt zwischen den einander gegenüber liegenden Kontaktbereichen 35, 36 der Leiterbahnmuster 33, 34, 35, 36 ergibt, die von der weiter unten erläuterten Auswerteschaltung erfasst werden kann.

Im ersten Fall können die Abstandselemente 37 relativ starr sein, während die Folien 31, 32 mit einer entsprechenden Elastizität auszubilden sind, oder die Abstandselemente 37 können elastisch zusammendrückbar ausgebildet sein, um eine Kontaktgabe zu ermöglichen, wobei die Flexibilität der Folien 31, 32 eine untergeordnete Rolle spielt. Selbsverständlich ist entsprechend eine Kombination beider Maßnahmen möglich, um die Kontaktgabe zu ermöglichen.

Die erste Folie 31 kann direkt auf den Kern 102, 103, 104 des in Figur 1 schematisch dargestellten Lenkradkranzes oder eines anderen Betätigungselementes aufgelegt sein, während die zweite Folie 32 auf der Außenseite liegt und von einer Hülle 7, beispielsweise im Fall eines Lenkrades, von einer Lederhülle umgeben ist.

Wie dies in den Figuren 4 und 5 weiterhin dargestellt ist, sind einzelne Kontaktbereiche 35, 36 gegebenenfalls durch eine größere Dicke aufweisende Bereiche 35, 36 der Leiterbahnen 33, 34 gebildet, wobei es bei entsprechend geringem Abstand der Folien 31, 32 jedoch auch möglich ist, die Leiterbahnen 33, 34 ohne jede Vergrößerung ihrer Dicke in den Kontaktbereichen 35, 36 zur Kontaktgabe heranzuziehen.

Sowohl die Leiterbahnen 33, 34 als auch die gegebenenfalls verstärkten Bereiche 35, 36 können beispielsweise in einem Druckverfahren auf die Folien 31, 32 aufgebracht werden, und gleiches gilt gegebenenfalls auch für die Abstandselemente 37. Diese Abstandselemente können im Übrigen zur Verbindung der beiden Folien 31, 32 miteinander verwendet werden, so dass sich eine integrierte Sensoreinheit ergibt, die auf den Kern 102, 103, 104 des Betätigungselementes aufgezogen und anschließend mit einer Abdeckung in Form einer Hülle 7 versehen werden kann.

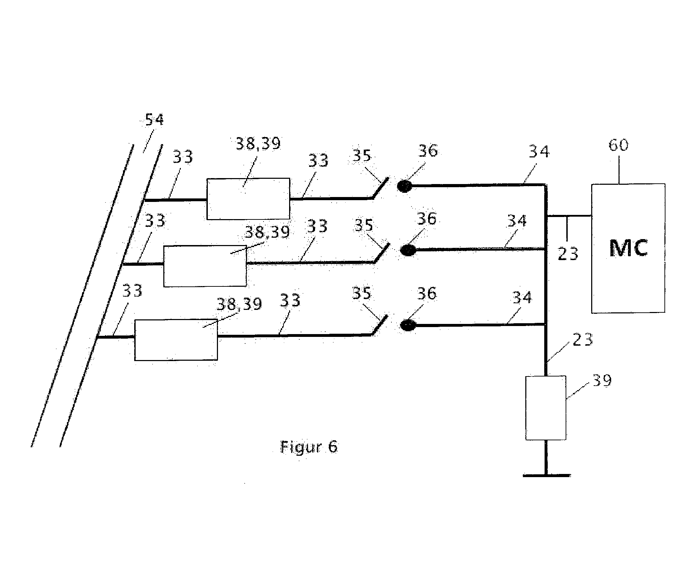

Gemäß einer bevorzugten Ausgestaltung der Erfindung sind die Leiterbahnen 33, 34 aus einem widerstandsbehafteten Material hergestellt, die bei der in Figur 3 dargestellten Ausführungsform über unterschiedliche Längenabschnitte der jeweiligen Verbindungs-Leiterbahnen mit den Sammelleitungen verbunden sind, so dass sich aufgrund der Widerstandsänderung zwischen den Sammelleitungs-Leiterbahnen der Ort einer Betätigung, das heißt einer Kontaktgabe zwischen den Leiterbahnen 33, 34 der beiden Folien 31, 32 ermitteln lässt, wie dies anhand der Figur 6 noch näher erläutert wird.

Das in Figur 3 gezeigte Leiterbahnmuster 33 einer der Laschen 11, 13 der ersten Folie 31 stellt lediglich eine denkbare Ausführungsform eines Leiterbahnmusters dar, wobei die in den Figuren 4 un 5 gezeigten verstärkten Bereiche 35, 36 fortgelassen sind. Hierbei sind außen liegende Sammelleitungen 54, 55 an einigen Stellen mit einzelnen Bereichen der Leiterbahnen 33 auf den Laschen verbunden und freie Enden 33', 33" der Leiterbahnen 33 sind mit den in Figur 2 gezeigten Sammelleitungen 23 auf dem Mittelsteg 2 verbunden, wobei der Mittelsteg 2 ebenfalls den Leiterbahnen 33 entsprechende Leiterbahnmuster aufweisen kann.

In Figur 6 ist schematisch eine Ausführungsform einer Auswerteschaltung gezeigt, bei der eine Verbindungs-Leiterbahn 54, 55 und die Leiterbahnen 33 der ersten Folie 31 mit den jeweiligen Kontaktbereichen 35, 36 verbunden ist, die einen Schalter bilden. Die Leiterbahnen 33 und/oder die Verbindungs-Leiterbahnen 54, 55 weisen einen von ihrer Länge abhängigen Widerstand auf, der in Form von Widerständen 38, 39 dargestellt ist. Der jeweils andere Kontakt der so gebildeten Schalter 35, 36 ist durch das Leiterbahnmuster 34 der zweiten Folie 32 gebildet und über eine weitere der Sammelleitungen 23 mit dem Eingang einer Auswerteschaltung in Form eines Mikroprozessors 60 verbunden, der Widerstandsänderungen zwischen den Sammelleitungen ermitteln kann, da diese beispielsweise bei der in Figur 6 gezeigten Ausführungsform der Auswerteschaltung in Form von Änderungen des Spannungsabfalls an dem Widerstand 39 auftreten, wenn die Sammelleitungen 54, 55 mit einer Spannungsquelle verbunden sind.

In gleicher Weise kann der Mikroprozessor 60 jedoch auch direkt eine Widerstandsmessung zwischen den Sammelleitungen vornehmen, sofern er über einen Analog-Digitalwandler an seinen Eingängen verfügt.

Der Mikroprozessor 60 kann weiterhin so programmiert sein, dass er kontinuierlich einen Ist-Zustand des Widerstandes zwischen den Sammelleitungen 54, 55 feststellt, beispielsweise in Abhängigkeit der Anzahl der betätigten Schalter 35, 36 und des durch deren Verbindungs-Leiterbahnen gebildeten Widerstandes 38. Auf diese Weise können Störeinflüsse, die durch Kriechströme oder kontinuierlich aufgrund einer zu starken Spannung in der Außenhülle der Betätigungselemente auftretende Kontaktgaben neutralisiert werden, wobei jedoch eine Kraftausübung auf zumindest eine der Folien 31, 33 zu einer Änderung des dem Mikroprozessor zugeführten Signals führt und damit ausgewertet werden kann.

Das Leiterbahnmuster 34 der zweiten Folie 32 kann bei dem beschriebenen Ausführungsbeispiel des Leiterbahnmusters 33 der ersten Folie relativ vollflächig und gegebenenfalls ohne wesentliche Widerstandseigenschaften ausgebildet sein.

Es ist weiterhin möglich, das Leiterbahnmuster 34 der außen liegenden Folie 32 als Widerstandselement einer Lenkrad-Heizung auszubilden oder die von der ersten Folie 31 abgewandte Fläche der zweiten Folie mit entsprechenden zusätzlichen Leiterbahnen zur Bildung einer Lenkrad-Heizung zu versehen.

## Patentansprüche

1. Überwachungssystem für Kraftfahrzeuge, mit einer Anzahl von Sensoren, die auf Steuerungs- und/oder Betätigungseinrichtungen des Kraftfahrzeuges angeordnet sind, mit Auswerteeinrichtungen zur Auswertung der Ausgangssignale der Sensoren und mit Signalisierungseinrichtungen, die Steuersignale an Signalgeber und/oder Betriebseinrichtungen des Fahrzeuges liefern, wobei die Steuerungs- und/oder Betätigungseinrichtungen (1) einen Kern (102, 103, 104) und eine diesen zumindest teilweise abdeckende Außenhülle (7) aufweisen und Sensorelemente (6) zwischen dem Kern (102, 103, 104) und dessen Außenhülle (7) eingebettet und über einen wesentlichen Teil einer Außenoberfläche der Betätigungseinrichtungen verteilt sind und bei einer Ausübung einer Kraft auf die Außenhülle (7) ein Ausgangssignal liefern, **dadurch gekennzeichnet, dass** die Sensorelemente durch eine vorgefertigte Sensoreinheit (6) gebildet sind, die auf den Kern (102, 103, 104) aufspannbar und durch die Außenhülle (7) abdeckbar ist, dass die Sensoreinheit (6) eine erste elektrisch isolierende Folie (31) mit einem ersten Leiterbahnmuster (33) und eine darüber angeordnete zweite elektrisch isolierende Folie (32) mit einem zweiten Leiterbahnmuster (34) aufweist, wobei die Leiterbahnmuster (33, 34) auf den einander zugewandten Flächen der ersten und zweiten Folie (31, 32) angeordnet sind, dass die einander zugewandten Flächen der ersten und/oder zweiten Folie (31, 32) über zwischen den Folien angeordnete Abstandselemente (37) miteinander verbunden sind, dass die Folien elastisch voneinander fort vorgespannt sind und durch Ausübung einer Kraft auf zumindest eine der Folien ein Kontakt zwischen dem ersten und zweiten Leiterbahnmuster (33, 34) herstellbar ist, dass zumindest eines der ersten und zweiten Leiterbahnmuster (33, 34) in eine Vielzahl von Einzelbereichen unterteilt ist, und dass erste Gruppen von Einzelbereichen über Verbindungs-Leiterbahnen (54, 55, 56, 57) miteinander und über Sammelleitungs-Leiterbahnen (23) mit den Auswerteeinrichtungen (60) verbunden sind.

2. Überwachungssystem nach Anspruch 1, **dadurch gekennzeichnet, dass** die Verbindungs-Leitterbahnen und/oder Sammelleitungen (54, 55. 56, 57; 23) einen messbaren Widerstand aufweisen.

3. Überwachungssystem für Kraftfahrzeuge nach Anspruch 1 oder 2, **dadurch gekennzeichnet, dass** die Abstandselemente (37) elastisch verformbar sind.

4. Überwachungssystem nach einem der Ansprüche 1-3, **dadurch gekennzeichnet, dass** die erste und/oder zweite Folie im Bereich zwischen den Abstandselementen elastisch verformbar ist.

5. Überwachungssystem nach einem der vorhergehenden Ansprüche, **dadurch gekennzeichnet, dass** eines der ersten und zweiten Leiterbahnmuster durch eine vollflächige Leiterbahn gebildet ist.

6. Überwachungssystem nach einem der vorhergehenden Ansprüche, **dadurch gekennzeichnet, dass** die Sensoreinheit (6) einen Mittelsteg (2) aufweist, und dass von beiden Längsseiten des Mittelsteges (2) durch Zwischenräume (10, 12) voneinander beabstandete Laschen ((11, 13) ausgehen.

7. Überwachungssystem nach Anspruch 6, **dadurch gekennzeichnet, dass** bei einer mehrdimensional gekrümmten Oberfläche des Kerns (102, 103, 104) der Mittelsteg (2) der Sensoreinheit eine Form aufweist, die der Form einer der Krümmungslinien der Oberfläche folgt, und dass die Laschen ((11, 13) in Richtung einer zweiten Krümmungslinie, die zu der ersten Krümmungslinie an den Verbindungstellen mit dem Mittelsteg (2) jeweils im Wesentlichen unter einem rechten Winkel steht, auf die Oberfläche aufspannbar sind.

8. Überwachungssystem nach Anspruch 7, **dadurch gekennzeichnet, dass** der Kern (102) der Außenkranz (102) eines Lenkrades (1) ist, wobei die erste Krümmungslinie der Vorderkante des Außenkranzes (102) entspricht und die zweite Krümmungslinie dem Außenumfang des Querschnittes des Außenkranzes entspricht.

9. Überwachungssystem nach Anspruch 6, **dadurch gekennzeichnet, dass** bei einer mehrdimensional gekrümmten Oberfläche des Kerns (102, 103, 104) der Mittelsteg (2) der Sensoreinheit geradlinig ist und auf den entlang einer ersten Krümmungslinie gekümmten Außenumfang der gekrümmten Oberfläche des Kerns auflegbar ist, und dass die Laschen ((11, 13) in Richtung einer zweiten Krümmungslinie, die zu der Krümmungslinie an den Verbindungstellen mit dem Mittelsteg (2) jeweils im Wesentlichen unter einem rechten Winkel steht, auf die Oberfläche aufspannbar sind.

10. Überwachungssystem nach Anspruch 9, **dadurch gekennzeichnet, dass** der Kern (102) der Außenkranz (102) eines Lenkrades (1) ist, wobei die erste Krümmungslinie dem Außenumfang des Außenkranzes (102) entspricht und die zweite Krümmungslinie dem Außenumfang des Querschnittes des Außenkranzes entspricht.

11. Überwachungssystem nach einem der vorhergehenden Ansprüche, **dadurch gekennzeichnet, dass** eines der Leiterbahnmuster (33, 34) mit einer Spannungsquelle verbindbar ist, während das andere der Leiterbahnmuster über die Sammelleitungs-Leiterbahn (23) mit einem oder mehreren Eingängen eines einen Teil der Auswerteeinrichtungen (60) bildenden Mikroprozessors verbunden sind, der zur Messung des zwischen den beiden Leiterbahnmustern (33, 34) fließenden Stromes und/oder des Widerstandes zwischen diesen beiden Leiterbahnmustern ausgebildet ist.

12. Überwachungssystem nach Anspruch 11, **dadurch gekennzeichnet, dass** die Strom- bzw. Widerstandsmessung in kurzen Zeitabständen erfolgt und dass der Mikroprozessor aus den jeweiligen Messwerten einen Nullzustand ermittelt, wobei Abweichungen von diesem Nullzustand oberhalb eines vorgegebenen Schwellwertes ein Auslösekriterium für einen Alarmzustand darstellen.

13. Überwachungssystem nach einem der vorhergehenden Ansprüche, bei dem eine der Folien eine weitere Leiterbahn trägt, die zur Beheizung des Lenkrades ausgebildet ist.
